# EUROPEAN PATENT APPLICATION

(11) **EP 4 256 925 A1**
(43) Date of publication of application: **11.10.2023**
(21) Application number: 21900328.2
(22) Date of filing: 27.10.2021
(51) Int. Cl.: A01B 69/00

(54) **COMBINE AND TRAVEL ROUTE CREATION METHOD**

(30) Priority: 02.12.2020 JP 2020200126
(71) Applicant: Yanmar Holdings Co., Ltd., Osaka-shi, Osaka 530-8311 (JP)
(72) Inventor: SUZUKI, Hidetaka, Osaka-shi, Osaka 530-8311 (JP); YAMAGUCHI, Yuji, Osaka-shi, Osaka 530-8311 (JP); NISHII, Yasuto, Osaka-shi, Osaka 530-8311 (JP); MURAYAMA, Masaaki, Okayama-Shi, Okayama 702-8515 (JP)
(74) Representative: Dennemeyer & Associates S.A.
(86) International application number: PCT/JP2021/039603
(87) International publication number: WO 2022/118573

(57) **Abstract**

[Problem] To provide a combine and a travel route creation method with which division can be set so as to enable the creation of a travel route with good operational efficiency.

[Solution] A combine 1 includes a control device 50, and the control device 50 functions as a travel route creation unit 61 which creates a travel route in an operation region of an agricultural field, and as an automatic operation control unit 62 which controls automatic traveling and automatic reaping along the travel route. The travel route creation unit 61, when creating a travel route in which automatic reaping traveling is performed by reciprocal movement over a plurality of courses along a row direction in the operation region having a plurality of rows of the agricultural field, performs the following: calculates a recommended number of divisions of the operation region on the basis of the size of the operation region, reaping information per one course of a reaping unit 3, and turning information according to a state between courses; divides the operation region into a plurality of divided regions on the basis of the recommended number of divisions; and creates a travel route over the plurality of divided regions.

## Description

### TECHNICAL FIELD

The present invention relates to a combine that performs automatic reaping traveling according to a travel route in which the combine creates the travel route based on a number of divisions according to a state of an agricultural field, and a travel route creation method that creates a travel route in which the combine performs automatic traveling and automatic reaping.

### BACKGROUND ART

Conventionally, a combine, which reaps cereal culms while traveling in an agricultural field, can perform automatic reaping traveling according to a preset travel route based on a position information of the device of the combine that is acquired using a satellite positioning system such as a GPS.

For example, a working vehicle automatic travel system disclosed in Patent Literature 1 includes a region setting unit that sets a work field into a surrounding region and sections acquired by dividing work target region into a plurality of regions by dividing regions, a route management unit that manages a plurality of travel route components that compose a travel route ranging over all the sections and a circle route component that composes a circle route that circles around the surrounding region and the dividing region so that the components can be read, and a route component selecting unit that selects a next travel route component or a next circle route component in which a working vehicle is to travel next based on a position of the working vehicle and a working travel state of another working vehicle so that at least one working vehicle performs working travel in each section.

### CITATION LIST

### Patent Literature

Patent Literature 1: JP6689738

### DISCLOSURE OF INVENTION

### PROBLEMS TO BE SOLVED BY THE INVENTION

When performing harvesting work of agricultural products from cereal culms planted on a plurality of rows in the agricultural field, for example, a combine performs a reciprocating travel on a plurality of straight-line courses along a row direction to perform reciprocating reaping in which the combine performs reaping work of a predetermined number of rows in every one course. When performing the automatic reaping traveling of the reciprocating reaping as described above, the combine previously creates a travel route in which the combine performs the reciprocating travel on the plurality of straight-line course. Further, when a travel route is created, a division may be set in the work region of the agricultural field as described above, and for example, a worker visually checks the work region and arbitrarily decides a number and positions of the divisions. The combine divides the work region based on the number and the positions of the divisions input according to an operation of the worker and creates a travel route ranging over the plurality of divided regions.

However, when a plurality of rows of cereal culms are planted in the agricultural field, it is difficult for the worker to visually understand a number of rows and a length of rows in an aligning direction correctly only by visually checking the agricultural field. Therefore, it is difficult for the worker to decide positions and forward directions of a start course and a finish course of each divided region so that the work efficiency of the automatic reaping traveling is increased, and it is difficult for the worker to decide efficient number and positions of the divisions.

For example, when the worker decides a smaller number of divisions, there is a problem that the divided region becomes longer in a row aligning direction and a distance of a travel route without working between the divided regions becomes longer. Further, it is difficult for the worker to decide the length of the divided region in the row aligning direction so that this length of the divided region is to be a multiple of the reaping width of the combine (for example, maximum number of rows to be reaped), and there is a problem that a course having a smaller number of rows to be reaped than the maximum number of rows to be reaped, such as one row or two rows, is set in a divided region. Note that, when the reaping work is performed in a course having such a small number of rows, there may be a problem that threshing accuracy is decreased and waste straw is caught, etc. due to reduction in a reaping amount and travel in an already-reaped region.

Note that, in the technique described in Patent Literature 1, although a work of creating a dividing region is performed, a number of rows, length in an aligning direction, and work efficiency are not considered. Therefore, the above-described problems may occur.

The object of the present invention is to provide a combine and a travel route creation method in which a division that makes it possible to create a travel route having a good work efficiency can be set.

### MEANS FOR SOLVING THE PROBLEMS

In order to solve the above-described problems, a combine according to the present invention is characterized in that the combine includes: a reaping unit that reaps a cereal culm; a travel route creation unit that, when a travel route in which automatic reaping traveling is performed by reciprocating a plurality of courses along a row direction in a work region having a plurality of rows in an agricultural field is created, calculates a recommended number of divisions in the work region based on a size of the work region, reaping information per one course by the reaping unit, and turn information according to a state between courses, divides the work region into a plurality of divided regions based on the recommended number of divisions, and creates the travel route ranging over the plurality of divided regions; and an automatic drive control unit that controls automatic traveling and automatic reaping according to the travel route.

In the combine of the present invention described above, it is preferable that the travel route creation unit calculates turn time that is the turn information according to a distance between courses that is the state between courses.

In the combine of the present invention described above, it is preferable that the travel route creation unit decides a turning method that is the turn information according to a distance between courses that is the state between courses and calculates the turn time based on the distance between courses and the turning method.

In the combine of the present invention described above, it is preferable that the travel route creation unit calculates the recommended number of divisions so that total time of the turn time is to be shortest.

In the combine of the present invention described above, it is preferable that the travel route creation unit sets an even number of courses for the divided region to create the travel route.

In the combine of the present invention described above, it is preferable that: the combine further includes a selecting unit that selects which travel route of reciprocating reaping in which automatic reaping traveling is performed by reciprocating the plurality of courses in the work region, and circling reaping in which automatic reaping traveling is performed by repeating circling along an inner periphery of the work region toward a center side, is to be created as a travel route in which automatic reaping traveling is performed; and when the reciprocating reaping is selected by the selecting unit, the travel route creation unit calculates the recommended number of divisions and creates the travel route of the reciprocating reaping based on the recommended number of divisions.

In the combine of the present invention described above, it is preferable that: the combine further includes an adjusting unit that accepts adjustment of the recommended number of divisions calculated by the travel route creation unit; and the travel route creation unit recreates the travel route based on a number of divisions adjusted by the adjusting unit.

Further, in order to solve the above-described problems, a travel route creation method according to the present invention is a travel route creation method that creates a travel route in which a combine performs automatic traveling and automatic reaping, characterized in that: when the travel route of automatic reaping traveling is performed by reciprocating a plurality of courses along a row direction in a work region having a plurality of rows in an agricultural field is created, the travel route creation method calculates a recommended number of divisions in the work region based on a size of the work region, reaping information per one course, and turn information according to a state between courses, divides the work region into a plurality of divided regions based on the recommended number of divisions, and creates the travel route ranging over the plurality of divided region.

In the travel route creation method of the present invention described above, it is preferable that the travel route creation method calculates turn time that is the turn information according to a distance between courses that is the state between courses.

In the travel route creation method of the present invention described above, it is preferable that the travel route creation method decides a turning method that is the turn information according to a distance between courses that is the state between courses and calculates the turn time based on the distance between courses and the turning method.

In the travel route creation method of the present invention described above, it is preferable that the travel route creation method calculates the recommended number of divisions so that total time of the turn time is to be shortest.

In the travel route creation method of the present invention described above, it is preferable that the travel route creation method sets an even number of courses in the divided region to create the travel route.

In the travel route creation method of the present invention described above, it is preferable that the travel route creation method accepts a selection of which travel route of reciprocating reaping in which automatic reaping traveling is performed by reciprocating the plurality of courses in the work region, and circling reaping in which automatic reaping traveling is performed by repeating circling along an inner periphery of the work region toward a center side, is to be created as a travel route in which automatic reaping traveling is to be performed; and when the reciprocating reaping is selected by the selection, calculates the recommended number of divisions and creates the travel route of the reciprocating reaping based on the recommended number of divisions.

In the travel route creation method of the present invention described above, it is preferable that the travel route creation method: accepts adjustment of the calculated recommended number of divisions; and recreates the travel route based on a number of divisions adjusted by the adjustment.

### EFFECT OF THE INVENTION

According to the present invention, there are provided a combine and a travel route creation method in which a division that makes it possible to create a travel route having a good work efficiency can be set.

### BRIEF DESCRIPTION OF DRAWINGS

FIG. 1 is a side view of a combine according to an embodiment of the present invention.
FIG. 2 is a block diagram of a mobile station and a base station of the combine according to the embodiment of the present invention.
FIG. 3 is a block diagram of the combine according to the embodiment of the present invention.
FIG. 4 is a flow chart illustrating an example operation of setting a number of divisions in a work region in the combine according to the embodiment of the present invention.
FIG. 5 is a plan view illustrating an agricultural field of the example operation of the combine according to the embodiment of the present invention along with courses.
FIG. 6 is a plan view illustrating an agricultural field of the example operation of the combine according to the embodiment of the present invention along with courses and divided regions.
FIG. 7 is a plan view illustrating an agricultural field of the example operation of the combine according to the embodiment of the present invention along with divided regions and a travel route.
FIG. 8 is a plan view illustrating a division setting screen in the combine according to the embodiment of the invention.

### DESCRIPTION OF EMBODIMENTS

A combine 1 according to an embodiment of the present invention will be described. The combine 1 travels in an agricultural field of a work target by an automatic drive or a manual operation and performs a work such as reaping for performing harvesting work of agricultural products from cereal culms planted on a plurality of rows in the agricultural field. For example, the combine 1 is configured to perform an automatic work of controlling a travel speed according to a manual operation while controlling the steering by an automatic drive, or perform an unmanned work of controlling steering and a travel speed by an automatic drive, and can autonomously travel, turn, and work in the agricultural field.

The combine 1 performs, in a plurality of rows of cereal culms, a reaping work of these rows while traveling on one course having a number of rows equal to or less than a maximum number of rows to be reaped. In the present invention, although the maximum number of rows to be reaped is not limited, the combine 1 for six-row reaping in which the maximum number of rows to be reaped is six is described in this embodiment.

The combine 1 is configured to previously create a travel route having a predetermined travel pattern and to perform automatic reaping traveling according to the travel route. For example, the combine 1 can create a travel route having a travel pattern such as a reciprocating reaping in which the automatic reaping traveling is performed by reciprocating a plurality of courses in the work region having a plurality of rows, or a circling reaping in which the automatic reaping traveling is performed by repeating circling along an inner periphery of the work region toward the center side. Further, when a travel route of the reciprocating reaping is created, the combine 1 sets divisions having a predetermined number of divisions along the row direction and divides the work region into a plurality of divided region by the divisions to create a travel route ranging over the plurality of divided region so that the reciprocating reaping is performed in each divided region in an aligning order.

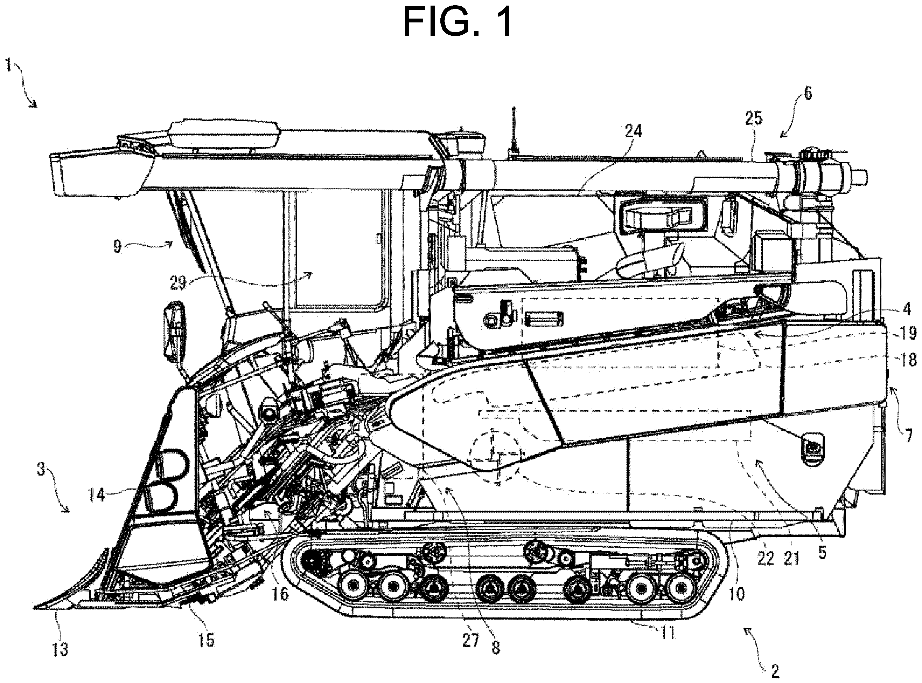

As shown in FIG. 1, the combine 1 includes a traveling unit 2, a reaping unit 3, a threshing unit 4, a sorting unit 5, a storage unit 6, a waste straw processing unit 7, a motive power unit 8, and a steering unit 9, and is configured by a so-called head-feeding type combine. The combine 1 travels by the traveling unit 2, and at the same time, threshes cereal culms reaped by the reaping unit 3 in the threshing unit 4, sorts grain in the sorting unit 5, and stores the sorted grain in the storage unit 6. The combine 1 processes a waste straw after threshing by the waste straw processing unit 7. The combine 1 actuates the traveling unit 2, the reaping unit 3, the threshing unit 4, the sorting unit 5, the storage unit 6, and the waste straw processing unit 7 by the motive power supplied by the motive power unit 8.

The traveling unit 2 is provided below a machine body frame 10 and includes a pair of left and right crawler type traveling devices 11 and a transmission (not shown). The traveling unit 2 rotates a crawler of the crawler type traveling device 11 by the motive power (for example, rotation motive power) transmitted from the engine 27 of the motive power unit 8 to make the combine 1 to travel in a front-back direction or turn in a left-right direction. The transmission transmits the motive power (rotation motive power) of the motive power unit 8 to the crawler type traveling device 11 and can also change the speed of the rotation motive power.

The reaping unit 3 is provided in front of the traveling unit 2 and performs a reaping work of the rows that are equal to or smaller than a maximum number of rows to be reaped included within a predetermined reaping width. The reaping unit 3 includes a divider 13, a raising device 14, a cutting device 15, and a conveying device 16. The divider 13 divides glasses of the cereal culms of the agricultural field every one row and guides the cereal culms of the predetermined number of rows equal to or smaller than the maximum number of rows to be reaped to the raising device 14. The raising device 14 raises the cereal culms that are guided by the divider 13. The cutting device 15 cuts the cereal culms that are raised by the raising device 14. The conveying device 16 conveys the cereal culms that are cut by the cutting device 15 to the threshing unit 4.

The threshing unit 4 is provided behind the reaping unit 3. The threshing unit 4 includes feed chains 18 and a threshing drum 19. The feed chains 18 convey the cereal culms that are conveyed from the conveying device 16 of the reaping unit 3 for threshing and further conveys the cereal culms after threshing, that is, waste straw, to the waste straw processing unit 7. The threshing drum 19 threshes the cereal culms that are being conveyed by the feed chains 18.

The sorting unit 5 is provided below the threshing unit 4. The sorting unit 5 includes a shakingly sorting device 21, a wind sorting device 22, a grain conveying device (not shown), and a straw dust discharging device (not shown). The shakingly sorting device 21 shakes the threshed material dropped from the threshing unit 4 to sort the threshed material into grain and straw dust, etc. The wind sorting device 22 further sorts the threshed material sorted by the shakingly sorting device 21 into grain and straw dust, etc. by blowing air. The grain conveying device conveys the grain sorted by the shakingly sorting device 21 and the wind sorting device 22 to the storage unit 6. The straw dust discharging device discharges the straw dust, etc. sorted by the shakingly sorting device 21 and the wind sorting device 22 to an outside of the machine.

The storage unit 6 is provided on the right side of the threshing unit 4. The storage unit 6 includes a grain tank 24 and a discharging device 25. The grain tank 24 stores the grain conveyed from the sorting unit 5. The discharging device 25 is composed of an auger, etc. and discharges the grain stored in the grain tank 24 to a selected place.

The waste straw processing unit 7 is provided behind the threshing unit 4. The waste straw processing unit 7 includes a waste straw conveying device (not shown) and a waste straw cutting device (not shown). The waste straw conveying device conveys the waste straw conveyed from the feed chains 18 of the threshing unit 4 to the waste straw cutting device. The waste straw cutting device cuts the waste straw conveyed by the waste straw conveying device and discharges the waste straw to an outside of the machine, for example, discharges to the right rear side of the combine 1.

The motive power unit 8 is provided above the traveling unit 2 and in front of the storage unit 6. The motive power unit 8 includes the engine 27 for generating a rotation motive power. The motive power unit 8 transmits the rotation motive power generated by the engine 27 to the traveling unit 2, the reaping unit 3, the threshing unit 4, the sorting unit 5, the storage unit 6, and the waste straw processing unit 7.

The steering unit 9 is provided above the motive power unit 8. The steering unit 9 includes a driver's seat 29 and a plurality of operation tools (not shown). The driver's seat 29 is a seat on which the worker sits and is provided, for example, on the right side. The operation tools include a handle for changing the forward direction of the combine 1, that is, for manipulating the steering of the combine 1, and the worker operates the operation tools such as the handle to operate the travel and the work of the combine 1. Further, the operation tools include an accelerator that adjusts a rotation speed of the engine 27, that is, the travel speed of the traveling unit 2 of the combine 1, and an elevation switch that elevates the reaping unit 3.

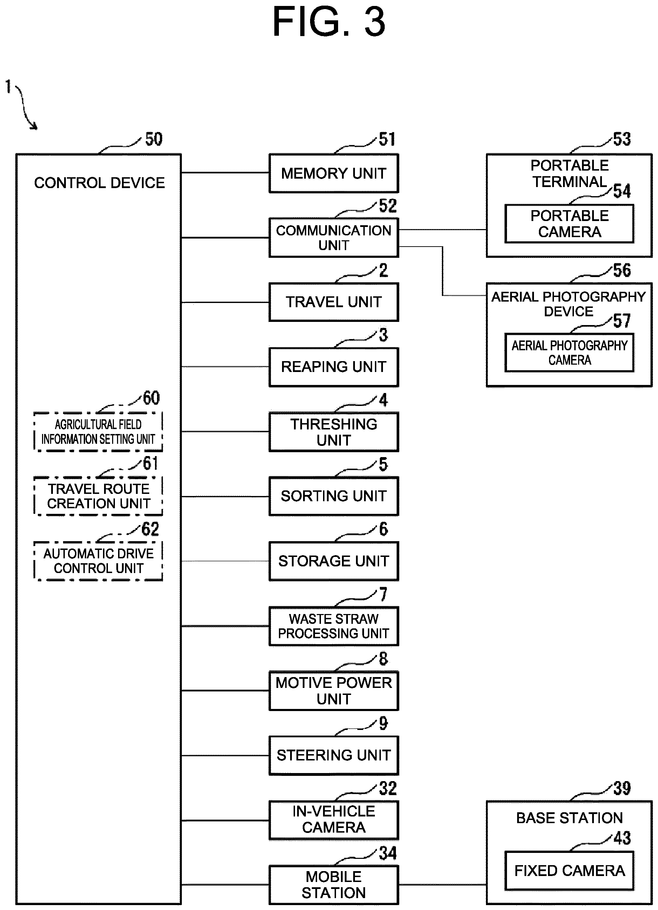

The combine 1 includes an in-vehicle camera 32 that takes an image of the periphery of the combine 1 (see FIG. 3). The in-vehicle camera 32 takes an image of the agricultural field of the work target to acquire an agricultural field image.

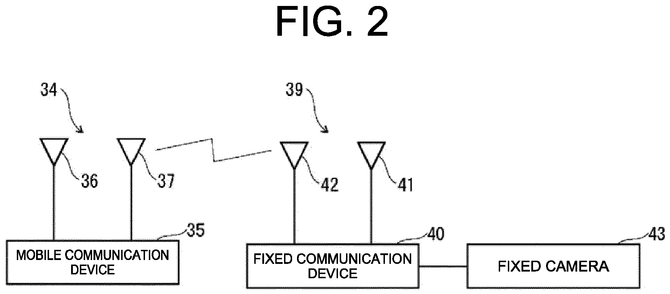

As shown in FIG. 2, the combine 1 includes a mobile station 34 that acquires the position information of the combine 1 using a satellite positioning system such as a GPS. For example, the mobile station 34 includes a mobile communication device 35, a mobile GPS antenna 36, and a data receiving antenna 37. The mobile communication device 35 communicates with a GPS satellite by the mobile GPS antenna 36 to acquire the position information of the mobile station 34, that is, the position information of the combine 1.

Note that, as shown in FIG. 2, a base station 39 may be provided on a ridge, etc. surrounding the agricultural field that is to be the work target of the combine 1. In this embodiment, an example in which the base station 39 is used for correction of the position information of the combine 1 is described. However, the base station 39 may not be included and the correction of the position information by the base station 39 may not be performed. The base station 39 includes a fixed communication device 40, a fixed GPS antenna 41, and a data sending antenna 42. The fixed communication device 40 communicates with a GPS satellite by the fixed GPS antenna 41 to acquire position information of the base station 39. The fixed communication device 40 sends a correction information based on the position information of the base station 39 to the mobile communication device 35 via the data sending antenna 42.

Further, the base station 39 may include a fixed camera 43 that takes an image of the agricultural field. The fixed camera 43 takes the image of the agricultural field of the work target to acquire the agricultural field image. The fixed communication device 40 acquires the image taken by the fixed camera 43 and sends it to the mobile communication device 35 via the data sending antenna 42. In this embodiment, an example in which the fixed camera 43 of the base station 39 is used for acquiring the agricultural field information is described. However, the fixed camera 43 may not be included and the acquisition of the agricultural field information by the fixed camera 43 may not be performed.

The mobile communication device 35 of the mobile station 34 performs wireless communication with the fixed communication device 40 of the base station 39 via the data receiving antenna 37. The mobile communication device 35 receives the correction information from the fixed communication device 40 and corrects the position information of the mobile station 34, that is, the position information of the combine 1, based on the correction information. The mobile communication device 35 receives the agricultural field image taken by the fixed camera 43 from the fixed communication device 40.

Next, the control unit 50 of the combine 1 will be described with reference to FIG. 3.

The control unit 50 is composed of a computer such as a CPU, and is connected to the memory unit 51 such as ROM, RAM, a hard disk drive, flash memory, etc. The memory unit 51 stores a program and data for controlling a variety of components and a variety of functions of the combine 1 and controls the variety of components and the variety of functions by running a calculation process by the control unit 50 based on the program and the data stored in the memory unit 51. For example, the control unit 50 controls the mobile station 34 to acquire the position information of the combine 1 from the mobile communication device 35.

The combine 1 includes a communication unit 52 and the control unit 50 performs wireless communication with an external device such as a portable terminal 53 held by the worker via the communication unit 52 to send and receive a variety of information to and from the portable terminal 53. The portable terminal 53 is a terminal capable of remotely controlling the combine 1, and, for example, is composed of a tablet type terminal or a laptop type personal computer, etc. including a touch panel. Note that the operation tool similar to the portable terminal 53 may be included in the steering unit 9. Note that the portable terminal 53 may include a portable camera 54 that takes an image. For example, the portable camera 54 takes an image of the agricultural field of the work target to acquire the agricultural field image. In this embodiment, an example in which the portable camera 54 is used for acquiring the agricultural field information is described. However, the portable camera 54 may not be included and the acquisition of the agricultural field information by the portable camera 54 may not be performed.

The portable terminal 53 is configured to accept an input operation by a touch operation, etc. on the touch panel for the agricultural field information about the agricultural field of the work target. For example, the portable terminal 53 displays an agricultural field information setting screen on which a shape of an agricultural field end that configures an outer periphery of the agricultural field (hereinafter, referred to as agricultural field shape), position information (coordinates, etc.) of the agricultural field end, a shape of a region of yet-to-be-reaped cereal culms in the agricultural field, position information (coordinates, etc.) of a region having yet-to-be-reaped cereal culms (hereinafter, referred to as yet-to-be-reaped region), a row direction of a plurality of rows in the agricultural field or the yet-to-be-reaped region, a row aligning direction (width direction) intersecting with the row direction, a width of the agricultural field or the yet-to-be-reaped region in the aligning direction, and total number of rows of the plurality of rows, etc. can be set as the agricultural field information. Further, the portable terminal 53 can display an agricultural field map based on the agricultural field information and, at the same time, display the travel route of the combine 1 on the agricultural field map so that the forward direction can be seen.

The portable terminal 53 functions as a selecting unit that accepts a selection of the travel pattern of the automatic reaping traveling of the combine 1. For example, when a travel route of the automatic reaping traveling is created, the portable terminal 53 as the selecting unit displays a travel selecting screen on which a travel pattern of the reciprocating reaping or the circling reaping is selected on the touch panel. The portable terminal 53 sends selection information of the travel pattern (reciprocating reaping or circling reaping) input according to the operation on the travel selecting screen to the combine 1 to order the creation of the travel route.

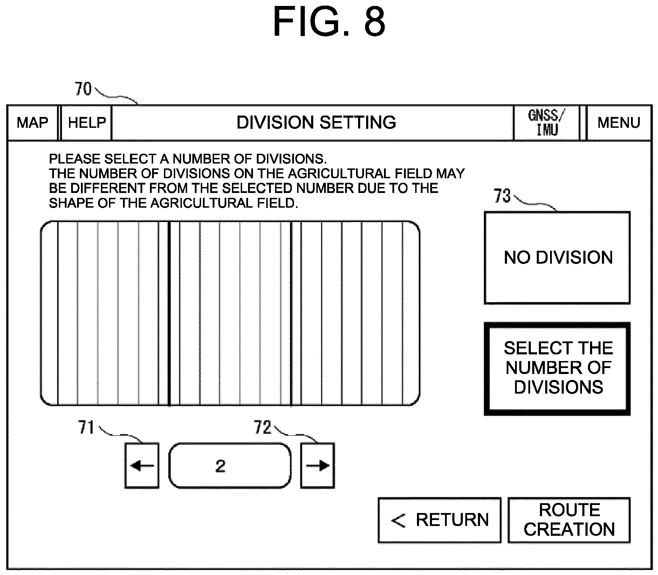

Further, the portable terminal 53 functions as an adjusting unit that accepts adjustment of a number of divisions that is automatically set by the combine 1. For example, the portable terminal 53 as the adjusting unit receives data of the number of divisions set by the combine 1 and the travel route of the reciprocating reaping from the combine 1 and displays a division setting screen 70 on which the work region, the division, and the travel route are combined and displayed, on the touch panel (see FIG. 8). The portable terminal 53 displays the number of divisions on this division setting screen 70 and includes a reduction button 71 and an addition button 72 of the number of divisions to accept an operation of reducing or adding the number of divisions. Note that, when no division is selected by an operation of the no division button 73 on the division setting screen 70, the number of divisions is set as zero. The portable terminal 53 includes a travel route creation button on the division setting screen 70 to accept a travel route creation operation. The portable terminal 53 sends adjustment information of the number of divisions input according to an operation on the division setting screen 70 (number of divisions after adjustment) to the combine 1 to order resetting of the division and recreating of the travel route.

Note that the control unit 50 may perform wireless communication with an aerial photography device 56 such as a drone including an aerial photography camera 57 via the communication unit 52, and the aerial photography device 56 may perform wireless communication with the portable terminal 53. In this embodiment, an example in which the aerial photography device 56 and the aerial photography camera 57 are used for acquiring the agricultural field information is described. However, the aerial photography device 56 and the aerial photography camera 57 may not be included and the acquisition of the agricultural field information by the aerial photography camera 57 may not be performed. The control unit 50 or the portable terminal 53 accepts an operation command of the aerial photography device 56 and an imaging command of the agricultural field by the worker and sends these commands to the aerial photography device 56. The aerial photography device 56 operates according to the operation command, and controls the aerial photography camera 57 according to the imaging command to acquire the agricultural field image by taking an image of the agricultural field. The aerial photography device 56 sends the agricultural field image taken by the aerial photography camera 57 to the control unit 50 or the portable terminal 53.

The control unit 50 receives the agricultural field image taken by the in-vehicle camera 32, the fixed camera 43, the portable camera 54, or the aerial photography camera 57 and displays it on a monitor of the steering unit 9. In another case, the control unit 50 may send the taken agricultural field image to the portable terminal 53 and display it on a monitor of the portable terminal 53.

Further, the combine 1 presets the maximum number of rows to be reaped that is a value of reaping ability of the reaping unit 3 as six rows and stores it in the memory unit 51. When the combine 1 performs the reaping work of a smaller number of rows to be reaped than the maximum number of rows to be reaped, such as one row or two rows, there may be a problem that threshing accuracy is decreased and waste straw is caught due to reduction in a reaping amount and a travel in an already-reaped region. However, when performing the reaping work of the number of rows to be reaped that is smaller than the maximum number of rows to be reaped, such as four rows or five rows, etc., a reduction amount of the reaping amount is small and a travel width in the already-reaped region is narrow, and hence, the problems described above are reduced. According to the above, in this embodiment, a number of rows in which the problems due the reaping work of smaller number of rows are reduced is referred to as a lowermost number of rows to be reaped, and the combine 1 presets five rows as the lowermost number of rows to be reaped that is smaller than the maximum number of rows to be reaped and stores it in the memory unit 51. Note that the lowermost number of rows to be reaped may be able to be arbitrarily set according to an input operation on the portable terminal 53 by the worker, and is not limited to five rows that are smaller than the maximum number of rows to be reaped by one and may be set as four rows that are smaller than the maximum number of rows to be reaped by two.

The combine 1 presets the reaping width of each row, the reaping width per one course (for example, reaping width of rows of the maximum number of rows to be reaped), and a number of rows to be reaped per one course (for example, the maximum number of rows to be reaped) as the reaping information of the reaping unit 3 and stores it in the memory unit 51. Note that the reaping width per one course may be recognized based on the reaping width per row. Further, the combine 1 presets turn information according to a state between courses as a value of turn capability of the traveling unit 2 and the motive power unit 8 and stores it in the memory unit 51. For example, the combine 1 may turn, on the headland, not only between two adjacent courses, but also between two courses between which one or more course is skipped, and store the turn information for each of a variety of turns between two courses. Further, the combine 1 stores the turn information such as a turning radius and turn time between courses, etc. according to a state between courses such as a distance between courses and a number of courses skipped, etc. for each turn between courses. Note that, the combine 1 may set a turn information in consideration of a road condition (such as a degree of muddy) and a landform of the headland (such as an inclination) between courses as a state between courses.

Further, the control unit 50 acts as an agricultural field information setting unit 60, a travel route creation unit 61, and an automatic drive control unit 62 by running the program stored in the memory unit 51. Note that the travel route creation unit 61 is to realize a travel route creation method according to the present invention.

The agricultural field information setting unit 60 automatically or manually sets the agricultural field information about the agricultural field of the work target and stores the information in the memory unit 51. For example, the agricultural field information setting unit 60 manually sets the agricultural field information according to an input operation of the agricultural field information to the agricultural field information setting screen of the portable terminal 53. In another case, the agricultural field information setting unit 60 acquires the agricultural field image that is an image of the agricultural field taken by the in-vehicle camera 32 of the combine 1, the fixed camera 43 of the base station 39, the portable camera 54 of the portable terminal 53, or the aerial photography camera 57 of the aerial photography device 56, and automatically acquires the agricultural field information by performing an image analysis on the agricultural field image. Note that the agricultural field information setting unit 60 may analyze the agricultural field image taken by any one camera of the in-vehicle camera 32, the fixed camera 43, the portable camera 54, or the aerial photography camera 57 for the agricultural field information, and may analyze the agricultural field images taken by two or more cameras for the agricultural field information.

Further, the agricultural field information setting unit 60 may acquire a more correct agricultural field information by checking for consistency between the agricultural field information manually set via the portable terminal 53 and the agricultural field information automatically set from the agricultural field image taken by the in-vehicle camera 32, the fixed camera 43, the portable camera 54, or the aerial photography camera 57.

The travel route creation unit 61 creates a travel route that is to be referenced so that the combine 1 will perform the automatic traveling and the automatic reaping by the automatic drive in the agricultural field, and stores the created travel route in the memory unit 51. The travel route includes not only a travel setting about traveling but also a work setting about a work such as reaping. The travel setting includes, in addition to a travel position in the agricultural field, a travel speed and a forward direction (steering direction and forwarding or returning) at each travel position. The work setting includes information about actuation or stop of reaping at each travel position, reaping speed and reaping height, a number of rows to be reaped, and another work.

The travel route creation unit 61 sets a straight-line-shaped course in which the combine performs reaping while traveling in the yet-to-be-reaped region in the agricultural field as a work region, and set the travel route by combining a plurality of straight-line courses in the work region. According to the selection information of the travel pattern (reciprocating reaping or circling reaping) that is selected by the selecting unit such as the portable terminal 53, the travel route creation unit 61 creates a travel route of this travel pattern. In this embodiment, the travel route creation unit 61 creates a travel route in which, for a plurality of rows in the work region, a combine performs a reciprocating travel on a plurality of straight-line courses along a row direction to perform a reciprocating reaping in which the combine performs a reaping work of a predetermined number of rows in each course. During the reaping work, there are a yet-to-be-reaped region and a region after the reaping work of cereal culms (hereinafter, referred to as already-reaped region) in the work region. The travel route creation unit 61 disposes courses of the reciprocating reaping so that the already-reaped region is positioned on the right side of the machine body of the combine 1 and the yet-to-be-reaped region is positioned on the left side of the machine body of the combine 1 to the extent possible.

Specifically, the travel route creation unit 61 creates a travel route to perform the reciprocating travel in which the combine travels in one direction on a course on one end side in the row aligning direction that intersects with the row direction, and then, travels on the headland to move to the other end side, and travels in another direction (opposite direction to the one direction) on a course on the other end side. Further, the travel route creation unit 61 creates a travel route in which such a reciprocating travel is performed while shifting the course from both end sides in the aligning direction to the center side. As a result, the start course of the travel route is set at one end side in the aligning direction in the work region and the finish course is set at the center side.

Further, the travel route creation unit 61 may set any of a variety of turning method for a no-reaping travel route in which the combine travels on the headland between two courses, including a U-shaped turn that is a basic turning method in which a 180-degree-tum is performed only by moving forward, and a fishtail turn in which the combine returns after a 90-degree-turn is performed by moving forward, and then, another 90-degree-turn is performed by moving forward.

The travel route creation unit 61 may automatically select a turning method according to a distance between two courses. For example, the travel route creation unit 61 may select the U-shaped turn when the distance between two courses is relatively long, and on the other hand, may select the fishtail turn when the distance between two courses is relatively short and hence it is impossible to perform the U-shaped turn. In another case, when the lowermost turning radius is preset and a turning radius between courses is equal to or larger than the lowermost turning radius, the combine 1 may set the U-shaped turn between the courses. On the other hand, when a turning radius between courses is less than the lowermost turning radius, the combine 1 may set the fishtail turn between the courses. Further, the travel route creation unit 61 may automatically select a turning method according to a road condition (degree of muddy, etc.) and a landform of the headland (inclination, etc.). In another case, the travel route creation unit 61 may manually select a turning method according to an input operation by using the portable terminal 53.

Especially in this embodiment, an example in which the travel route creation unit 61 sets divisions of a predetermined number of divisions in the work region to create a travel route will be described. The travel route creation unit 61 calculates a recommended number of divisions in the work region based on the size of the work region, the reaping information per one course by the reaping unit 3, and the turn information according to the state between courses. The travel route creation unit 61 acquires the agricultural field information set by the agricultural field information setting unit 60 from the memory unit 51 to acquire the size of the work region based on the agricultural field information. The travel route creation unit 61 acquires the preset reaping information of one course of the reaping unit 3 from the memory unit 51 and acquires the preset turn information according to the state between courses from the memory unit 51.

Specifically, the travel route creation unit 61 divides the width or the total number of rows in the work region in the row aligning direction as the size of the work region by the reaping width or the number of rows to be reaped as the reaping information of one course, and sets the result of the division calculation as a total number of courses in the work region. The travel route creation unit 61 sets zero as the recommended number of divisions when the total number of courses is less than a predetermined number of courses (for example, 12), does not divide the work region, and creates a travel route of the reciprocating reaping having, in the work region, a start course on one end side in the aligning direction and a finish course on a center side.

On the other hand, when a total number of courses is equal to or larger than the predetermined number of courses (for example, 12), the travel route creation unit 61 calculates the recommended number of divisions equal to or larger than one based on the total number of courses and the turn information. Based on the premise that, when the work region is divided into a plurality of divided regions by divisions, distributions of the courses in respective divided regions are different from each other according to the number of divisions and the distribution of divisions, combination of no-reaping travel routes between courses in each divided region and combination of no-reaping travel routes between the divided regions, etc. are different. Therefore, total time of turn time and a total distance of turn distances required for a plurality of divided regions are different according to the number of divisions and the distribution of divisions. According to the above, the travel route creation unit 61 calculates and sets a number of divisions that makes the total turn time the shortest or a number of divisions that makes the total turn distance the shortest as a recommended number of divisions that is the best for the work region or a recommended number of divisions that is recommended for the work region.

For example, the travel route creation unit 61 presets a lowermost number of courses (for example, six) and temporarily divides the work region into a plurality of divided regions each having a number of courses that is equal to or larger than the lowermost number of courses. The travel route creation unit 61 temporarily creates a travel route of the reciprocating reaping having a start course and a finish course in each divided region that is temporarily divided. Note that, preferably, the travel route creation unit 61 temporarily divides the work region so that each divided region has an even number of courses. When the total number of courses is an odd number, the last divided region in the plurality of divided regions is set to have an odd number of courses and each of the other divided regions is set to have an even number of courses.

Note that, since it is preferable that the courses are set so that the already-reaped region is positioned on the right side of the machine body of the combine 1 as described above, the travel route creation unit 61 set the start course of the next divided region so that one divided region that is the already-reaped region is positioned on the right side of the machine body of the combine 1. Further, in the plurality of divided regions, it is preferable that a no-reaping travel route between the finish course of one divided region and the start course of the next divided region is made as short as possible. Therefore, the travel route creation unit 61 sets the forward direction of the finish course of one divided region and the forward direction of the start course of the next divided region opposite to each other, and sets the start course of the next divided region positioned on the side of the one divided region. According to the above, the travel route creation unit 61 sets an even number of courses for each divided region.

The travel route creation unit 61 performs a temporal division of the above-described plurality of divided regions and a temporal creation of the travel route for a variety of division patterns having different numbers of divisions and different distributions of division, and calculates total turn time or total turn distance for each division pattern. Then, the travel route creation unit 61 compares the total turn time or the total turn distance among the division patterns and selects the division pattern whose total turn time or total turn distance is the shortest. The travel route creation unit 61 sets the result of subtracting one from a number of regions of the plurality of divided regions that are divided by division pattern as the recommended number of divisions. In another case, the travel route creation unit 61 may set a number of divisions of a selected division pattern as the recommended number of divisions.

For example, when a total number of courses in the work region is 24, there are contemplated a division pattern in which one is set as the number of divisions and the work region is divided into two divided regions each having 12 courses, a division pattern in which two is set as the number of divisions and the work region is divided into three divided regions each having eight courses, and a division pattern in which three is set as the number of divisions and the work region is divided into four divided regions each having six courses The travel route creation unit 61 will select, from the above-described division patterns, the division pattern in which the total turn time or the total turn distance is the shortest.

Note that, as the number of division becomes smaller, a moving distance between divided regions becomes longer, and therefore, the total turn time or the total turn distance tends to increase. According to the above, the travel route creation unit 61 preferably optimizes the number of division and the moving distance between divided regions to reduce the total turn time or the total turn distance. The turning radius between courses becomes shorter near the finish course of each divided region, and the fishtail turn tends to be set. Since the turn time of the fishtail turn is longer than that of the U-shaped turn, a number of the fishtail turns becomes larger as the number of divisions becomes larger, and hence, the total turn time increases. According to the above, the travel route creation unit 61 preferably optimizes the number of divisions so that the number of the fishtail turns decreases to reduce the total turn time.

Further, the travel route creation unit 61 sets divisions having the division distribution of the recommended number of divisions and the division pattern that have been set as described above in the work region, divides the work region into a plurality of divided region by the divisions, sets a plurality of courses in each divided region, and creates a travel route ranging over the plurality of courses in each divided region. Further, the travel route creation unit 61 connects courses between the divided regions by setting a no-reaping travel route in which the combine travels on the headland between the finish course of one divided region and the start course of the next divided region. In this way, the travel route creation unit 61 creates a travel route ranging over the plurality of divided regions.

Although the travel route creation unit 61 preferably sets the maximum number of rows to be reaped (allocate rows of the maximum number of rows to be reaped) for each course to the extent possible, the travel route creation unit 61 sets a number of rows equal to or larger than the lowermost number of rows to be reaped for each course based on the total number of rows in each divided region as well as the maximum number of rows to be reaped and the lowermost number of rows to be reaped that are values of reaping ability of the reaping unit 3 to create a travel route. The travel route creation unit 61 may set the maximum number of rows to be reaped for a course only having the already-reaped rows regardless of whether the left side and the right side of the machine body of the combine 1 are the already-reaped region or the yet-to-be-reaped region. For example, in a divided region other than the last divided region, the course along the division has the yet-to-be-reaped region on the right side of the machine body of the combine 1, and therefore, the travel route creation unit 61 fixedly sets the maximum number of rows to be reaped for such a course along the division.

Further, the travel route creation unit 61 may sets the lowermost number of rows to be reaped for a course having the already-reaped row and the yet-to-be-reaped row. In this case, the travel route creation unit 61 sets a course having the lowermost number of rows to be reaped as the travel route so that the already-reaped row is positioned on the right side of the front of the machine body of the combine 1 and the yet-to-be-reaped row is positioned on the left side of the front of the machine body of the combine 1, that is, so that the already-reaped region is positioned on the right side of the machine body of the combine 1.

When a plurality of courses are set in a divided region, firstly, as a first setting operation, the travel route creation unit 61 divides the total number of rows in the divided region by the maximum number of rows to be reaped. Hereinafter, this division calculation is referred to as a first division calculation. When there is no remainder after the first division calculation, that is, the total number of rows is a multiple of the maximum number of rows to be reaped, the travel route creation unit 61 sets the maximum number of rows to be reaped for each course in the divided region to create the travel route.

On the other hand, when there is the remainder after the first division calculation, as a second setting operation, the travel route creation unit 61 temporarily sets the maximum number of rows to be reaped for each course other than the finish course in the divided region, temporarily sets the lowermost number of rows to be reaped for the finish course as an adjustment course, and divides the number of remaining rows other than the finish course by the maximum number of rows to be reaped. Hereinafter, this division calculation is referred to as a second division calculation.

When the remainder of the result of this second division calculation (a number of remaining rows) is equal to or less than the difference between the maximum number of rows to be reaped and the lowermost number of rows to be reaped, the travel route creation unit 61 sets an added number of rows that is calculated by adding the lowermost number of rows to be reaped and the number of remaining rows for the finish course in the divided region, and at the same time, sets the maximum number of rows to be reaped for each remaining course other than the finish course to create the travel route.

Further, when the remainder of the result of the second division calculation (a number of remaining rows) is more than the difference between the maximum number of rows to be reaped and the lowermost number of rows to be reaped, as a third setting operation, the travel route creation unit 61 temporarily sets the lowermost number of rows to be reaped for the adjustment course including the finish course and another course in the divided region and divides the number of remaining rows other than the adjustment course by the maximum number of rows to be reaped, that is, performs another second division calculation.

When the remainder of the result of this another second division calculation (a number of remaining rows) is equal to or less than the difference between the maximum number of rows to be reaped and the lowermost number of rows to be reaped, the travel route creation unit 61 sets an added number of rows that is calculated by adding the lowermost number of rows to be reaped and the number of remaining rows for the adjustment course, and at the same time, sets the maximum number of rows to be reaped for each remaining course other than the adjustment course to create the travel route.

Note that, when the remainder of the result of this another second division calculation (a number of remaining rows) is more than the difference between the maximum number of rows to be reaped and the lowermost number of rows to be reaped, the travel route creation unit 61 further performs the third setting operation. In other words, the travel route creation unit 61 repeats the third setting operation until a number of remaining rows becomes a number equal to or less than the difference between the maximum number of rows to be reaped and the lowermost number of rows to be reaped.

When another course is added to the adjustment course in the third setting operation, the travel route creation unit 61 preferably add a predetermined number of courses before the finish course. For example, in a first third setting operation, the travel route creation unit 61 sets the adjustment course including, in addition to the finish course, a course that is one course before the finish course. Further, in a second third setting operation, the travel route creation unit 61 reset the adjustment course including, in addition to the first adjustment course (the finish course and the course that is one course before the finish course), a course that is two courses before the finish course. In this way, the travel route creation unit 61 adds one course to the adjustment course in a returning order from the finish course each time when the third setting operation is performed.

The automatic drive control unit 62 controls the motive power unit 8, as well as the traveling unit 2 and the reaping unit 3 based on the travel setting and the work setting of the travel route created in the travel route creation unit 61 to perform the automatic traveling and the automatic reaping according to the travel route. The automatic drive control unit 62 automatically reaps the yet-to-be-reaped cereal culms on the travel route by the reaping unit 3. Further, along with the automatic reaping, the automatic drive control unit 62 controls the threshing unit 4, sorting unit 5, the storage unit 6, and the waste straw processing unit 7 to automatically perform threshing of the cereal culms after the reaping, sorting of grain and straw dusts after the threshing, storing of the grain after the sorting, and processing of the waste straw after the threshing, etc. Note that, the combine 1 may include a gyro sensor and a direction sensor to acquire displacement information and direction information of the combine 1, and the automatic drive control unit 62 may adjust the automatic travel of the combine 1 based on the displacement information and the direction information.

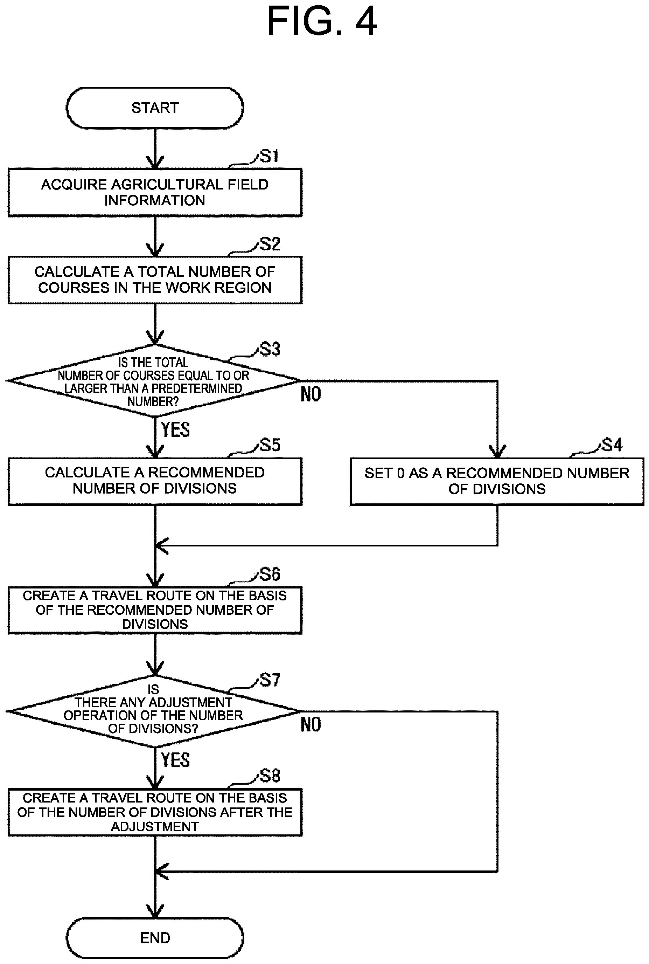

Next, an example operation of setting a number of divisions in the work region by the combine 1 will be described with reference to a flow chart in FIG. 4.

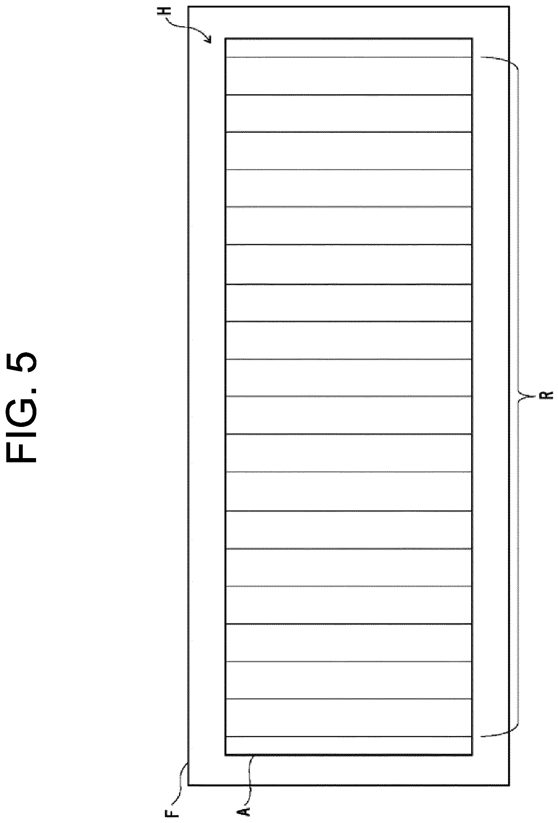

Firstly, as shown in FIG. 5, in order to perform automatic reaping traveling of a yet-to-be-reaped region in an agricultural field F as a work region A, the agricultural field information setting unit 60 sets an agricultural field information such as a size of the work region A automatically or manually. The agricultural field F has a headland H around the work region A that is to be a space for turn when the reciprocating reaping traveling is performed.

Next, the travel route creation unit 61 acquires the size of the work region from the agricultural field information set by the agricultural field information setting unit 60 and acquires the preset reaping information of one course of the reaping unit 3 (step Sl). Then, the travel route creation unit 61 divides a width of the work region A that is the size of the work region A by a reaping width that is a reaping information per one course, and calculates the result of the division calculation as a total number of courses of the plurality of courses R in the work region A (step S2). In an example shown in FIG. 5, a total number of courses of 19 is calculated from the work region A.

When the calculated total number of courses is less than a predetermined number of courses (for example, 12) (step S3: NO), the travel route creation unit 61 sets zero as the recommended number of divisions (step S4) and creates a travel route of the reciprocating reaping in the work region A (step S6).

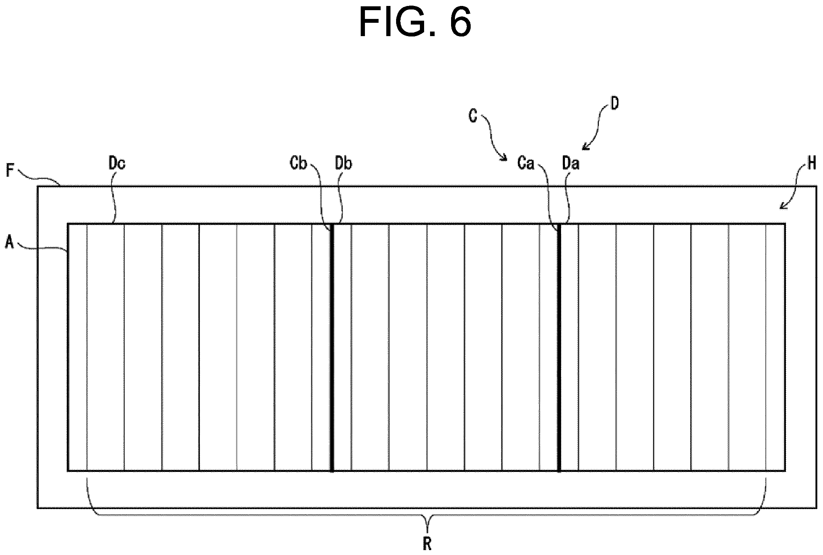

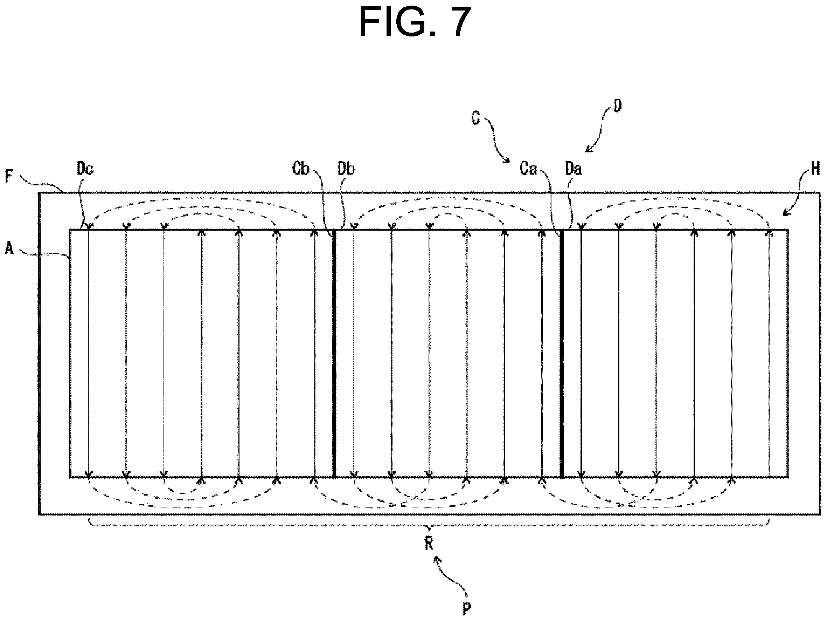

On the other hand, when the total number of courses is equal to or larger than the predetermined number of courses (for example, 12) (step S3: YES), the travel route creation unit 61 calculates the recommended number of divisions equal to or larger than one based on the total number of courses and the turn information (step S5). Then, the travel route creation unit 61 divides the work region A by divisions C of the calculated recommended number of divisions into a plurality of divided regions D as shown in FIG. 6, and creates a travel route P ranging over the plurality of divided regions D as shown in FIG. 7 (step S6). In an example shown in FIG. 6, two divisions Ca and Cb divide the work region A into three divided regions Da, Db, and Dc.

Further, the travel route creation unit 61 sends data of the recommended number of divisions and the travel route that are set to the portable terminal 53 as an adjusting unit of the number of divisions. The portable terminal 53 displays the division setting screen 70 on the touch panel based on the data as shown in FIG. 8, and accept an adjustment operation of the reduction or addition of the number of divisions, or no division via the division setting screen 70 (step S7). When the reduction or addition of the number of divisions, or the no division is operated (step S7: YES), the portable terminal 53 sends the adjustment information of the number of divisions to the combine 1 according to the operation of creating the travel route, and orders resetting of the division and recreating of the travel route. Note that, when an operation of a reduction button 71 or an addition button 72 of the number of divisions, or a no division button 73 on the division setting screen 70, and an operation of a travel route creation button are not performed (step S7: NO), resetting of the division C and recreating of the travel route P may not be performed.

When the combine 1 receives the adjustment information of the number of divisions and an order of resetting of the division and recreating of the travel route from the portable terminal 53, the travel route creation unit 61 sets the number of divisions after adjustment, divides the work region A by divisions C of the number of divisions after adjustment into a plurality of divided regions D, and recreates the travel route P ranging over the plurality of divided regions D (step S8).

Note that, in the embodiment described above, an example in which the selecting unit that accepts selection of the travel pattern and the adjusting unit that accepts adjustment of the number of divisions are included in the portable terminal 53 is described. However, the present invention is not limited to this example. For example, in another embodiment, the combine 1 may include the selecting unit that accepts selection of the travel pattern and the adjusting unit that accepts adjustment of the number of divisions, and in this case, the travel selecting screen that cooperates with the selecting unit and the division setting screen 70 that cooperates with the adjusting unit may be displayed on any of the operation tools of the steering unit 9 and the portable terminal 53.

Note that, in the embodiment described above, an example in which the combine 1 temporarily creates the travel route of the work region, and at the same time, calculates the recommended number of divisions is described. However, the present invention is not limited to this example. For example, in another embodiment, without temporarily creating the travel route, the travel route creation unit 61 of the combine 1 may calculate the recommended number of divisions in the work region based on the size of the work region, reaping information per one course by the reaping unit 3, and turn information according to a state between courses. In this case, the travel route creation unit 61 preferably divides the work region into a plurality of divided regions based on the calculated recommended number of divisions or the number of divisions after adjustment of the recommended number of divisions to create the travel route.

As described above, according to this embodiment, the combine 1 includes the control unit 50 and the control unit 50 functions as the travel route creation unit 61 that creates the travel route in the work region of the agricultural field, and the automatic drive control unit 62 that controls the automatic traveling and the automatic reaping according to the travel route. When the travel route in which the automatic reaping traveling is performed by reciprocating the plurality of courses along the low direction in the work region having a plurality of rows in the agricultural field is created, the travel route creation unit 61 calculates the recommended number of divisions in the work region based on the size of the work region, reaping information per one course by the reaping unit 3, and turn information according to a state between courses, divides the work region into a plurality of divided regions based on the recommended number of divisions, and creates a travel route ranging over the plurality of divided regions.

In the combine 1 of this embodiment, the combine 1 or the portable terminal 53 includes the selecting unit that selects which travel route of the reciprocating reaping in which the automatic reaping traveling is performed by reciprocating a plurality of courses in the work region, and the circling reaping in which the automatic reaping traveling is performed by repeating circling along an inner periphery of the work region toward the center side, is to be created as the travel route in which the automatic reaping traveling is to be performed. Then, when the reciprocating reaping is selected by the selecting unit, the travel route creation unit 61 calculates the recommended number of divisions and creates the travel route of the reciprocating reaping based on the recommended number of divisions.

According to the combine 1 of this embodiment, since the recommended number of divisions suitable for the work region is automatically set in consideration of a size of the work region, reaping information per one course, and turn information according to a state between courses, the travel route having a good work efficiency such as work time or work distance can be created.

Further, in the combine 1 according to this embodiment, the travel route creation unit 61 calculates turn time that is the turn information according to a distance between courses that is the state between courses.

According to the above, since the recommended number of divisions suitable for the work region is automatically set in consideration of the turn time between courses, the travel route having good time efficiency of work can be created.

Further, in the combine 1 according to this embodiment, the travel route creation unit 61 decides a turning method that is the turn information according to the distance between courses that is the state between courses and calculates the turn time based on the distance between courses and the turning method.

According to the above, by setting a turning method suitable for the turn between courses, the travel route in which automatic reaping traveling can be performed safely and smoothly can be created.

Further, in the combine 1 according to this embodiment, the travel route creation unit 61 calculates the recommended number of divisions so that the total time of the turn time to be the shortest.

According to the above, the travel route having good time efficiency of work throughout the work region can be created.

Further, in the combine 1 according to this embodiment, the travel route creation unit 61 sets an even number of courses for the divided region to create the travel route.

According to the above, an entrance and an exit of each divided region can be positioned on the same side, and a no-reaping travel route between divided regions can be made shorter.

Further, in the combine 1 of this embodiment, the combine 1 or the portable terminal 53 includes the adjusting unit that accepts adjustment of the recommended number of divisions calculated by the travel route creation unit 61. Then, the travel route creation unit 61 recreates the travel route based on the number of divisions adjusted by the adjusting unit.

In this way, the combine 1 can reset the division according to an intention of the worker and can recreate the travel route according to the intention of the worker.

Note that, in the embodiment described above, an example in which the combine 1 sets the lowermost number of rows to be reaped for the finish course and for the predetermined number of courses before the finish course is described. However, the present invention is not limited to this example. For example, in another embodiment, the combine 1 does not limit the course for which the lowermost number of rows to be reaped is to be set to the course near the finish course (a course in the latter of the automatic reaping traveling), and may set the lowermost number of rows to be reaped for a course in the earlier or in the middle of the automatic reaping traveling as long as the course has the already-reaped region positioned on the right side of the machine body of the combine 1, or the course has the already-reaped row positioned on the right side of front of the machine body of the combine 1.

Further, the combine 1 can realize the method in which the reaping work having the maximum number of rows to be reaped is performed in the earlier of each divided region and the reaping work having the lowermost number of rows to be reaped that is lower than the maximum number of rows to be reaped is performed in the latter of each divided region. Further, when the automatic reaping traveling is performed in each divided region in consideration of a remaining amount of fuel of the engine 27 of the motive power unit 8 and a storing amount of grain in the grain tank 24 of the storage unit 6, since the combine 1 repeats the course in which the reaping work of the maximum number of rows to be reaped is performed in each divided region, the remaining amount of fuel and the storing amount of grain are easily recognized. Further, the combine 1 can adjust the remaining amount of fuel and the storing amount of grain in the finish course in each divided region in which the reaping work of the lowermost number of rows to be reaped is performed.

In the embodiment described above, although the example of the combine 1 that is composed of a head-feeding type combine, the present invention is not limited to this example and the combine 1 may be composed of a normal type combine. Further, in the embodiment described above, an example in which a U-shaped turn is performed to turn in the no-reaping travel route between courses in FIG. 7 is described. However, the present invention is not limited to this example. In the no-reaping travel route between courses, another turning method such as a fishtail turn can be performed to turn.

Note that the present invention can be appropriately changed without departing from an outline and an idea of the invention that can be read from the claims and the entire specification, and a combine including such a change is also included in the technical idea of the present invention.

### DESCRIPTION OF REFERENCE NUMERALS

- 1: combine
- 2: traveling unit
- 3: reaping unit
- 34: mobile terminal
- 39: base station
- 50: control device
- 51: memory unit
- 52: communication unit
- 53: portable terminal (selecting unit)
- 60: agricultural field information setting unit
- 61: travel route creation unit
- 62: automatic drive control unit

## Claims

1. A combine **characterized in that** the combine comprises:
a reaping unit that reaps a cereal culm;
a travel route creation unit that, when a travel route in which automatic reaping traveling is performed by reciprocating a plurality of courses along a row direction in a work region having a plurality of rows in an agricultural field is created, calculates a recommended number of divisions in the work region based on a size of the work region, reaping information per one course by the reaping unit, and turn information according to a state between courses, divides the work region into a plurality of divided regions based on the recommended number of divisions, and creates the travel route ranging over the plurality of divided regions; and
an automatic drive control unit that controls automatic traveling and automatic reaping according to the travel route.

2. The combine according to claim 1 **characterized in that** the travel route creation unit calculates turn time that is the turn information according to a distance between courses that is the state between courses.

3. The combine according to claim 2 **characterized in that** the travel route creation unit decides a turning method that is the turn information according to a distance between courses that is the state between courses and calculates the turn time based on the distance between courses and the turning method.

4. The combine according to claim 2 or claim 3 **characterized in that** the travel route creation unit calculates the recommended number of divisions so that total time of the turn time is to be shortest.

5. The combine according to any one of claim 1 to claim 4 **characterized in that** the travel route creation unit sets an even number of courses for the divided region to create the travel route.

6. The combine according to any one of claim 1 to claim 5 **characterized in that**: the combine further comprises a selecting unit that selects which travel route of reciprocating reaping in which automatic reaping traveling is performed by reciprocating the plurality of courses in the work region, and circling reaping in which automatic reaping traveling is performed by repeating circling along an inner periphery of the work region toward a center side, is to be created as a travel route in which automatic reaping traveling is performed; and
when the reciprocating reaping is selected by the selecting unit, the travel route creation unit calculates the recommended number of divisions and creates the travel route of the reciprocating reaping based on the recommended number of divisions.

7. The combine according to any one of claim 1 to claim 6 **characterized in that**: the combine further comprises an adjusting unit that accepts adjustment of the recommended number of divisions calculated by the travel route creation unit; and
the travel route creation unit recreates the travel route based on a number of divisions adjusted by the adjusting unit.

8. A travel route creation method that creates a travel route in which a combine performs automatic traveling and automatic reaping, **characterized in that**:
when the travel route in which automatic reaping traveling is performed by reciprocating a plurality of courses along a row direction in a work region having a plurality of rows in an agricultural field is created, the travel route creation method calculates a recommended number of divisions in the work region based on a size of the work region, reaping information per one course, and turn information according to a state between courses, divides the work region into a plurality of divided regions based on the recommended number of divisions, and creates the travel route ranging over the plurality of divided region.

9. The travel route creation method according to claim 8 **characterized in that** the travel route creation method calculates turn time that is the turn information according to a distance between courses that is the state between courses.

10. The travel route creation method according to claim 9 **characterized in that** the travel route creation method decides a turning method that is the turn information according to a distance between courses that is the state between courses and calculates the turn time based on the distance between courses and the turning method.

11. The travel route creation method according to claim 9 or claim 10 **characterized in that** the travel route creation method calculates the recommended number of divisions so that total time of the turn time is to be shortest.

12. The travel route creation method according to any one of claim 8 to claim 11 **characterized in that** the travel route creation method sets an even number of courses in the divided region to create the travel route.

13. The travel route creation method according to any one of claim 8 to claim 12 **characterized in that** the travel route creation method accepts a selection of which travel route of reciprocating reaping in which automatic reaping traveling is performed by reciprocating the plurality of courses in the work region, and circling reaping in which automatic reaping traveling is performed by repeating circling along an inner periphery of the work region toward a center side, is to be created as a travel route in which automatic reaping traveling is to be performed; and
when the reciprocating reaping is selected by the selection, calculates the recommended number of divisions and creates the travel route of the reciprocating reaping based on the recommended number of divisions.

14. The travel route creation method according to any one of claim 8 to claim 13 **characterized in that** the travel route creation method:
accepts adjustment of the calculated recommended number of divisions; and
recreates the travel route based on a number of divisions adjusted by the adjustment.
